# EUROPÄISCHE PATENTANMELDUNG

(11) **EP 4 707 784 A1**
(43) Veröffentlichungstag der Anmeldung: **11.03.2026**
(21) Anmeldenummer: 24198351.9
(22) Anmeldetag: 04.09.2024
(51) Int. Cl.: G01N 21/65

(54) **RAMAN-PHOTOMETER ZUR MESSUNG EINES ORTHO-PARA-VERHÄLTNISSES IN MOLEKULAREM WASSERSTOFF**

(71) Anmelder: Siemens Aktiengesellschaft, 80333 München (DE)
(72) Erfinder: Harr, Konstantin, 76133 Karlsruhe (DE); Heffels, Camiel, 76297 Stutensee-Büchig (DE)
(74) Vertreter: Siemens Patent Attorneys

(57) **Zusammenfassung**

Die Erfindung betrifft ein Raman-Photometer (10) zum Erfassen einer Zusammensetzung einer Stoffprobe (20) mit zumindest einer Komponente (22) mit einem ersten und einem zweiten Kernspin-Isomer (24, 26). Das Raman-Photometer (10) umfasst zumindest einen Bandpassfilter (30, 31, 32), der für ein Teilspektrum (27, 29) der Raman-Strahlung (25) der Komponente (22) der Stoffprobe (20) transparent ist. Ein erster Bandpassfilter (31) ist für das Teilspektrum (27) eines ersten Kernspin-Isomers (24) transparent. Die Erfindung betrifft ebenso ein korrespondierendes Verfahren (100) zum Erfassen eines Kernspin-Isomer-Verhältnisses (45) in einer Komponente (22) einer Stoffprobe (20). Weiter betrifft die Erfindung ein korrespondierendes Computerprogrammprodukt (50) zur Durchführung des Verfahrens (100) und eine Verwendung eines entsprechenden Raman-Photometers (10) zur Überwachung einer Verflüssigungsanlage (70). Ferner betrifft die Erfindung ein Simulationsverfahren (200), mit dem ein entsprechendes Raman-Photometer (10) simulierbar ist und ein dazu geeignetes Simulationsprogrammprodukt (60).

## Beschreibung

Die Erfindung betrifft ein Raman-Photometer und ein Verfahren zum Erfassen eines Kernspin-Isomer-Verhältnisses. Ebenso betrifft die Erfindung ein Computerprogrammprodukt zur Umsetzung eines solchen Verfahrens und die Verwendung einer Messvorrichtung zum Erfassen eines Kernspin-Isomer-Verhältnisses. Weiter betrifft die Erfindung ein Simulationsverfahren für ein Raman-Photometer und ein dazu geeignetes Simulationsprogrammprodukt.

Aus der Internationalen Anmeldung WO 2023/036651 A1 ist ein Raman-Photometer bekannt, das ein Grundmodul und mindestens ein Erweiterungsmodul umfasst. Im Erweiterungsmodul sind teildurchlässige Interferenzfilter und Empfangsvorrichtungen angeordnet, durch die eine Mehrzahl an Komponenten einer Stoffprobe im Wesentlichen simultan erfassbar ist.

Im Artikel "Raman spectroscopy for ortho-para hydrogen catalyst studies" von B. Krasch, S. Mirz, A. Smolinski, O. Süß, R. Größle, online erschienen am 03.05.2023 in "International Journal of Hydrogen Energy", Nr. 48 (2023) 29952-29961 ist ein Experiment offenbart, bei dem die Ortho-Para-Zusammensetzung von Wasserstoff mittels Raman-Spektroskopie gemessen wird.

Bei der Verflüssigung von Wasserstoff kommt es zu exothermen Ortho-Para-Übergängen, die bereits in der Gasphase mit Hilfe eines Katalysators beschleunigt werden sollten, um die Verflüssigung energieeffizient ablaufen zu lassen, weil sonst die Flüssigkeit sehr lange im kochenden Zustand verbleiben kann. Zur Überwachung der Aktivität des Katalysators ist das sogenannte Ortho-Para-Verhältnis in Wasserstoff bei dessen Verflüssigung, insbesondere der großtechnischen Verflüssigung, kontinuierlich zu überwachen. Es besteht somit ein Bedarf an einer präzisen, zuverlässigen, robusten und kosteneffizienten Möglichkeit, das in molekularem Wasserstoff vorliegende Kernspin-Isomer-Verhältnis zu erfassen. Der Erfindung liegt die Aufgabe zugrunde, eine Möglichkeit bereitzustellen, die in zumindest einem der genannten Aspekte eine Verbesserung bietet.

Die Aufgabenstellung wird durch ein erfindungsgemäßes Raman-Photometer gelöst, das zum Erfassen einer Zusammensetzung einer Stoffprobe ausgebildet ist. Die Stoffprobe weist zumindest eine Komponente auf, in der eine Mehrzahl an Kernspin-Isomeren vorliegt. Neben der zumindest einen Komponente kann die Stoffprobe weitere Komponenten, beispielsweise Verunreinigungen, aufweisen. Das Raman-Photometer weist eine Messzelle auf, in die die Stoffprobe einleitbar ist. Die Messzelle ist dazu ausgebildet, darin die Stoffprobe zum Emittieren von Raman-Strahlung anzuregen. Dazu kann an der Messzelle beispielsweise eine Lichtquelle, insbesondere ein Laser, angeordnet sein, die in die Messzelle einstrahlen kann. Weiter umfasst das Raman-Photometer zumindest einen ersten Bandpassfilter, der dazu ausgebildet ist, die emittierte Raman-Strahlung zu filtern. Der zumindest eine Bandpassfilter ist für ein Teilspektrum der von der Komponente der Stoffprobe emittierten Raman-Strahlung transparent. Erfindungsgemäß weist das Raman-Photometer einen ersten Bandpassfilter auf, der für das Teilspektrum eines ersten Kernspin-Isomers der Komponente der Stoffprobe transparent ist. Das Teilspektrum des ersten Kernspin-Isomers kann hierbei ein Wellenlängenspektrum sein, in dem ein Peak liegt, das für das erste Kernspin-Isomer charakteristisch ist. Demzufolge passiert lediglich das Teilspektrum der von der Komponente emittierten Raman-Strahlung das erste Bandpassfilter, aus dem eine Konzentration des ersten Kernspin-Isomers ableitbar ist. Das Raman-Photometer kann somit einen ersten Detektor aufweisen, der die durch den ersten Bandpassfilter gefilterte Raman-Strahlung erfasst. Der erste Detektor kann somit ein Empfangsspektrum aufweisen, das im Wesentlichen deckungsgleich mit dem durch den ersten Bandpassfilter transmittierten Teilspektrum der Raman-Strahlung ist.

Das erfindungsgemäße Raman-Photometer erlaubt es damit, das Vorhandensein bzw. die Konzentration eines Kernspin-Isomers in der Komponente der Stoffprobe präzise und schnell zu messen. Hierzu sind schmalbandige Detektoren, insbesondere Detektoren mit Interferenzfilter, geeignet, die einfach, kompakt und kosteneffizient sind. Dadurch, dass das erfindungsgemäße Raman-Photometer die Erfassung des ersten Kernspin-Isomers so auf ein Minimum an Daten fokussiert, ist der Datenverarbeitungsaufwand minimiert. Insbesondere reicht es bei Komponenten die Konzentration eines Kernspin-Isomers zu erfassen, wenn die entsprechende Komponente nur zwei Kernspin-Isomere aufweist. Dementsprechend ist das erfindungsgemäße Raman-Photometer schnell und zuverlässig. Infolgedessen ist das erfindungsgemäße Raman-Photometer zur Überwachung von potenziell gefährlichen Stoffproben, insbesondere in großtechnischen Prozessen geeignet.

In einer Ausführungsform des beanspruchten Raman-Photometers weist dieses einen zweiten Bandpassfilter auf, der für das Teilspektrum eines zweiten Kernspin-Isomers transparent ist. Das Teilspektrum des zweiten Kernspin-Isomers kann hierbei ein Wellenlängenspektrum sein, in dem ein Peak liegt, das für das zweite Kernspin-Isomer charakteristisch ist. Dadurch ist ergänzend eine Konzentration des zweiten Kernspin-Isomers erfassbar und gegenüber der erfassten Konzentration des ersten Kernspin-Isomers prüfbar bzw. plausibilisierbar.

Des Weiteren kann die Komponente der Stoffprobe, die mit dem beanspruchten Raman-Photometer zu untersuchen ist, molekularer Wasserstoff sein. Ferner kann das erste Kernspin-Isomer sogenannter Ortho-Wasserstoff sein und das zweite Kernspin-Isomer sogenannter Para-Wasserstoff. Ortho-Wasserstoff und Para-Wasserstoff weisen Peaks in klar unterscheidbaren Teilspektren auf, deren Intensität wiederum von deren jeweiliger Konzentration abhängt. Ferner sind die entsprechenden Peaks von Ortho-Wasserstoff und Para-Wasserstoff in gleicher Weise von verändertem Umgebungsbedingungen wie Umgebungsdruck oder Umgebungstemperatur betroffen, so dass ein unmittelbarer Vergleich entsprechender Peaks das zugehörige Kernspin-Isomer-Verhältnis ausdrückt. Demzufolge sind zusätzliche Sensoren für Größen wie Umgebungsdruck und Umgebungstemperatur beim beanspruchten Raman-Photometer entbehrlich. Das beanspruchte Raman-Photometer ist durch seinen einfachen Aufbau damit robust und zuverlässig. Da molekularer Wasserstoff nur Ortho- und Para-Wasserstoff als Kernspin-Isomere hat, kann die Erfassung eines einzigen Kernspin-Isomers zumindest vorübergehend genügen. Auch hierdurch ist das beanspruchte Raman-Photometer zur Überwachung einer Wasserstoff-Verflüssigung, insbesondere der großtechnischen Wasserstoff-Verflüssigung, geeignet. Darüber hinaus ist das Raman-Spektrum von Wasserstoff von den Raman-Spektren anderer Gase relativ weit entfernt, so dass zwischen diesen höchstens eine geringfügige Überlappung vorliegt. Infolgedessen sind Verunreinigungen im Wasserstoff in einfacher Weise identifizierbar. Dazu kann das beanspruchte Raman-Photometer mit mindestens einem zusätzlichen Detektor und/oder zusätzlichem Interferenzfilter ausgestattet sein. Das beanspruchte Raman-Photometer ist insgesamt besonders geeignet für die Messung des Kernspin-Isomer-Verhältnisses in molekularem Wasserstoff. Insbesondere bietet das beanspruchte Raman-Photometer eine deutlich schnellere Messung als Raman-Spektrometer und ist kosteneffizienter. Des Weiteren sind Wärmeleitfähigkeitssensoren nicht empfindlich genug, um das Kernspin-Isomer-Verhältnis in molekularem Wasserstoff zu erfassen. Zudem unterliegen Wärmeleitfähigkeitssensoren erheblichen Drifteffekten. Das beanspruchte Raman-Photometer bietet folglich eine verbesserte Möglichkeit zur Messung des Kernspin-Isomer-Verhältnisses in molekularem Wasserstoff.

In einer weiteren Ausführungsform des beanspruchten Raman-Photometers können der erste und der zweite Bandpassfilter abwechselnd einem einzigen Detektor vorschaltbar angeordnet sein. Der Detektor weist hierbei ein Erfassungsspektrum auf, das die Teilspektren für das erste und zweite Kernspin-Isomer abdeckt. Der erste und zweite Bandpassfilter kann mechanisch in einen Strahlengang der Raman-Strahlung gestellt werden, beispielsweise mit einem entsprechenden Revolvermechanismus. Insbesondere kann das Raman-Photometer dazu ausgebildet sein, das erste und zweite Bandpassfilter für eine vorgebbare Dauer dem Detektor vorzuschalten, beispielsweise durch eine Steuereinheit des Raman-Photometers. Das beanspruchte Raman-Photometer kann so besonders kompakt ausgebildet sein. Hierdurch wird insgesamt die Anzahl an optischen Bauteilen minimiert. Dadurch, dass sich zwischen den Messungen für das erste und zweite Kernspin-Isomer nur das Bandpassfilter ändert, ist das beanspruchte Raman-Photometer besonders stabil gegen Drifteffekte, so dass eine erhöhte Messgenauigkeit erzielbar ist.

Alternativ kann dem ersten Bandpassfilter ein erster Detektor zugeordnet sein und dem zweiten Bandpassfilter ein zweiter Detektor. Der erste Detektor ist derart abgeordnet, dass das durch den ersten Bandpassfilter hindurchtretende Teilspektrum vom ersten Detektor erfassbar ist. Korrespondierend ist der zweite Detektor derart angeordnet, dass das durch den zweiten Bandpassfilter hindurchtretende Teilspektrum vom zweiten Detektor erfassbar ist. Ferner können der erste und zweite Detektor auf unterschiedlichen Seiten der Messzelle angeordnet sein. Die Detektoren können jeweils als Photomultiplier ausgebildet sein, die ein für die hindurchtretenden Teilspektren ein jeweils korrespondierendes Empfangsspektrum aufweisen. Mit dem ersten und zweiten Detektor sind die Konzentrationen des ersten und zweiten Kernspin-Isomers im Wesentlichen gleichzeitig erfassbar. Die Erfassungsfrequenz für das Kernspin-Isomer-Verhältnis der Komponente der Stoffprobe ist hierdurch im Wesentlichen nur durch die Arbeitstakte der Detektoren und zumindest einer damit gekoppelten Auswertungseinheit begrenzt. Die Auswertungseinheit kann hierbei als Teil der Steuereinheit des Raman-Photometers ausgebildet sein. Das beanspruchte Raman-Photometer ist somit dazu geeignet, das Kernspin-Isomer-Verhältnis der Komponenten in der Stoffprobe im Wesentlichen simultan und in Echtzeit zu erfassen, und damit auch zu überwachen. Weiter sind durch das simultane Messen mehrerer Komponenten in der Stoffprobe, die entsprechenden Einzelmessungen mit dem beanspruchten Raman-Photometer im Wesentlichen frei von Schwankungen in Druck und/oder Laserintensität. Auch dadurch wird die erzielbare Genauigkeit beim Bestimmen des Kernspin-Isomer-Verhältnisses gesteigert. Bestimmungswidrige Abweichungen des Kernspin-Isomer-Verhältnisses sind damit frühzeitig erkennbar, was wiederum eine schnelle Reaktion im zugrundeliegenden Prozess erlaubt, beispielsweise einer Wasserstoff-Verflüssigung. Mit dem beanspruchten Raman-Photometer werden folglich die Energieeffizienz und die Sicherheit beim Betrieb eines entsprechenden technischen Prozesses gesteigert.

Ferner kann im beanspruchten Raman-Photometer der erste Bandpassfilter für eine Rotationslinie des ersten Kernspin-Isomers transparent sein. Alternativ oder ergänzend kann der zweite Bandpassfilter für eine Rotationslinie des zweiten Kernspin-Isomers transparent sein. Unter einer Rotationslinie ist hierbei eine Ramanlinie zu verstehen, die sich aus einem Rotationszustand des Moleküls in unterschiedlichen Kernspin-Isomeren ergibt. Rotationslinien bilden beispielsweise im Raman-Spektrum von molekularem Wasserstoff sind gut separiert voneinander. Dadurch sind auch geringe Konzentrationen eines Kernspin-Isomers, beispielsweise einem unerwünschten Kernspin-Isomers wie Ortho-Wasserstoff bei der Wasserstoff-Verflüssigung, erfassbar. Dadurch erlaubt das beanspruchte Raman-Photometer eine leistungsfähige Früherkennung für ein bestimmungswidriges Ansteigen einer Konzentration eines Kernspin-Isomers in der untersuchten Stoffprobe. Auch hierdurch kann die Funktion des Katalysators optimiert werden. Ferner stellen die Amplituden, und damit die Signalstärken, von Rotationslinien, also die entsprechenden Peaks, unmittelbar ein Verhältnis dar, das das Kernspin-Isomer-Verhältnisses widerspiegelt.

Darüber hinaus kann zumindest einer der Bandpassfilter im beanspruchten Raman-Photometer kippbar ausgebildet sein. Darunter ist ein Kippen oder Schwenken gegenüber der darauf einfallenden Raman-Strahlung zu verstehen. Zumindest einer der Bandpassfilter kann zu einem Vorgeben einer zentralen Wellenlänge vorgebbar kippbar ausgebildet sein. Unter der zentralen Wellenlänge ist hierbei eine Wellenlänge zu verstehen, die im Wesentlichen einer Mitte dessen transparenten Teilspektrums entspricht. Ferner kann an zumindest einem der Bandpassfilter ein Zusatz-Bandpassfilter angeordnet sein, durch den eine Halbwertsbreite, auch Full width half maximum oder kurz FWHM genannt, vorgebbar ist. Dadurch ist insgesamt das Teilspektrum der Raman-Strahlung einstellbar, das durch den zugehörigen Detektor erfassbar ist. Insbesondere kann zumindest einer der Bandpassfilter dazu ausgebildet sein, durch Kippen für Teilspektren des ersten und zweiten Kernspin-Isomers transparent zu sein. Hierzu kann der zumindest eine Bandpassfilter mit dem Zusatz-Bandpassfilter versehen sein, der unabhängig vom Bandpassfilter vorgebbar kippbar ist. Das Kippen des Bandpassfilters und/oder des Zusatz-Bandpassfilters durch die Steuereinheit des Raman-Photometers vorgebbar sein, beispielsweise durch Steuerbefehle an Antriebsmittel, über die der Bandpassfilter bzw. Zusatz-Bandpassfilter kippbar ist. Hierdurch kann das beanspruchte Raman-Photometer besonders kompakt ausgebildet sein. Toleranzen an den Bandpassfiltern und/oder an der Lichtquelle sind so kompensierbar, so dass für die Messungen des ersten und zweiten Kernspin-Isomers jeweils eine maximale Signalstärke erzielbar ist.

In einer weiteren Ausführungsform des beanspruchten Raman-Photometers kann die Messzelle mit zumindest einer durchstimmbaren Lichtquelle ausgestattet sein. Die durchstimmbare Lichtquelle kann beispielsweise als durchstimmbarer Laser ausgebildet sein, der dazu geeignet ist, Licht mit einer vorgebbaren Wellenlänge zu emittieren, mit dem wiederum die Komponente der Stoffprobe anregbar ist. Die Lichtquelle kann über einen Wellenlängenbereich durchstimmbar ausgebildet sein, der zumindest einem Wellenlängenabstand zwischen einem zu erfassenden Peak des ersten Kernspin-Isomers und einem zu erfassenden Peak des zweiten Kernspin-Isomers entspricht. Raman-Strahlung ergibt sich in puncto Wellenlänge in Relation zur Wellenlänge der Anregung, also eine Raman-Verschiebung. Dadurch sind beim ersten und zweiten Kernspin-Isomer in separaten Anregungen Raman-Strahlungen hervorrufbar, für die der zumindest eine Bandpassfilter transparent ist. Folglich sind die Konzentrationen des ersten und zweiten Kernspin-Isomers mit nur einem Detektor erfassbar, was wiederum einen kompakten Aufbau des beanspruchten Raman-Photometers erlaubt. Da Lichtquellen wie Laser schnell durchstimmbar sind, ist so auch eine relativ schnelle Erfassung des Kernspin-Isomer-Verhältnisses in der Stoffprobe möglich. In Verbindung mit einem Photomultiplier sind Signale zeitlich erfassbar, die den Spektren des ersten und zweiten Kernspin-Isomers entsprechen. Demzufolge ist hierbei nicht nur die Signalhöhe auswertbar, sondern auch die Form des zugehörigen Peaks.

Des Weiteren kann im beanspruchten Raman-Photometer die Messzelle mit einer ersten und einer zweiten Lichtquelle ausgestattet sein. Die Lichtquellen können jeweils als Laser ausgebildet sein, die auch durchstimmbar ausgebildet sein können. Mit der ersten und zweiten Lichtquelle ist die Stoffprobe abwechselnd zum Emittieren von Raman-Strahlung anregbar.

Die oben dargestellte Aufgabenstellung wird ebenso durch ein erfindungsgemäßes Verfahren gelöst, das dazu ausgebildet ist, ein Kernspin-Isomer-Verhältnis einer Komponente in einer Stoffprobe zu erfassen. Die Stoffprobe kann ferner eine weitere Komponente umfassen, beispielsweise Verunreinigungen. Zum Verfahren gehört ein erster Schritt, in dem die Stoffprobe bereitgestellt wird und die Stoffprobe, insbesondere eine Komponente der Stoffprobe, zum Emittieren von Raman-Strahlung angeregt. Dazu kann die Stoffprobe in eine Messzelle eingeleitet werden, die mit zumindest einer Lichtquelle ausgestattet sein kann. Die Lichtquelle ist dazu ausgebildet, dass die Stoffprobe in der Messzelle zum Emittieren der Raman-Strahlung angeregt werden kann. Dies ist auch möglich, wenn die Stoffprobe in einem kontinuierlichen Strom fließt.

Weiter umfasst das Verfahren einen zweiten Schritt, in dem die Raman-Strahlung, die von der Komponente der Stoffprobe emittiert wird, gefiltert wird. Die Raman-Strahlung wird derart gefiltert, dass ein Teilspektrum der Raman-Strahlung transmittiert wird, also einer weiteren Auswertung bereitgestellt wird. Hierzu kann entlang eines Ausbreitungspfads der Raman-Strahlung zumindest ein Bandpassfilter vorgesehen sein, das für das zu transmittierende Teilspektrum transparent ist.

In einem dritten Schritt des erfindungsgemäßen Verfahrens werden in der transmittierten Raman-Strahlung ein erstes und ein zweites Peak erfasst. Das erste Peak ist durch ein erstes Kernspin-Isomer in der Komponente der Stoffprobe verursacht. Gleichermaßen wird ein zweites Peak erfasst, das durch ein zweites Kernspin-Isomer in der Komponente der Stoffprobe hervorgerufen wird. Hierzu kann entlang der Ausbreitungsrichtung der Raman-Strahlung zumindest ein Detektor hinter dem zumindest einen Bandpassfilter angeordnet sein. Das Erfassen des ersten bzw. zweiten Peaks kann in einem Erfassen eines Maximums dieses Peaks und/oder jeglichen anderen mit dem Peak verknüpften geometrischen Größe bestehen. Ferner gehört ein vierter Schritt zum erfindungsgemäßen Verfahren, in dem basierend auf dem erfassten ersten und zweiten Peak, also daraus abgeleiteten Größen des ersten und zweiten Peaks, ein Kernspin-Isomer-Verhältnis ermittelt. Das so ermittelte Kernspin-Isomer-Verhältnis wird im vierten Schritt an einen Benutzer und/oder eine Datenschnittstelle ausgegeben. Im vierten Schritt kann insbesondere basierend auf dem ersten und zweiten Peak ein Quotient aus deren Amplituden, also aus deren Signalstärken, gebildet werden.

Das erfindungsgemäße Verfahren erlaubt es, in einfacher Weise schnell und präzise das Kernspin-Isomer-Verhältnis in der Komponente der Stoffprobe zu ermitteln. Raman-Strahlung weist für unterschiedliche Kernspin-Isomere eines Stoffs klar unterscheidbare Peaks auf, deren Amplitude, also Signalstärke, wiederum im Zusammenhang mit deren Konzentrationen stehen. Hierdurch ist eine trennscharfe Unterscheidung zwischen den einzelnen Kernspin-Isomeren möglich. Durch die Erfassung von Konzentrationen mehrerer Kernspin-Isomere ist Redundanz in der Messung gegeben, so dass das erfindungsgemäße Verfahren sicher ist und für großtechnische Prozesse geeignet ist.

In einer Ausführungsform des beanspruchten Verfahrens ist die Komponente der Stoffprobe, für die das Kernspin-Isomer-Verhältnis zu erfassen ist, molekularer Wasserstoff. Weiter ist das zugehörige erste Kernspin-Isomer sogenannter Ortho-Wasserstoff und das zweite Kernspin-Isomer sogenannter Para-Wasserstoff. Ortho- und Para-Wasserstoff sind die einzigen Kernspin-Isomere von molekularem Wasserstoff. Durch ein Erfassen des ersten und zweiten Peaks ist bei der Ermittlung des Kernspin-Isomer-Verhältnisses Redundanz gegeben. Insbesondere kann basierend auf dem ersten und zweiten Peak eine Plausibilitätsprüfung während des Verfahrens durchgeführt werden. Wenn die aus dem ersten und zweiten Peak ermittelten Konzentrationen von Ortho-Wasserstoff und Para-Wasserstoff nicht zu im Wesentlichen 100 Prozent addieren, kann ein Vorliegen eines Defekts in der dazu eingesetzten Vorrichtung ermittelt werden, beispielsweise ein Defekt in einer Lichtquelle, beispielsweise einem Laser. Auch hierdurch ist das beanspruchte Verfahren besonders robust und damit für großtechnische Prozesse geeignet. Wasserstoff weist als das kleinste Molekül Rotationslinien auf, die von der Emission der Lichtquelle entfernt sind, so dass die Emissionen der Lichtquelle in einfacher Weise mit Bandpass- oder Kantenfiltern herausfilterbar sind.

Darüber hinaus kann das erste Peak in einem ersten Teilspektrum der Raman-Strahlung liegen und das zweite Peak in einem zweiten Teilspektrum. Das erste und zweite Teilspektrum kann hierbei disjunkt sein, also nicht überlappend. Dementsprechend sind das erste und zweite Peak korrespondierend hinter einem ersten bzw. zweiten Bandpassfilter separat voneinander erfassbar. Überlagernde Effekte zwischen dem ersten und zweiten Peak sind so in Wesentlichen ausschließbar, was eine präzise Erfassung der Konzentrationen des ersten und zweiten Kernspin-Isomers erlaubt. Das beanspruchte Verfahren erzielt somit in einfacher Weise ein erhöhtes Maß an Messgenauigkeit.

Ferner können im beanspruchten Verfahren das erste Peak und das zweite Peak im dritten Schritt im Wesentlichen gleichzeitig erfasst werden. Dazu kann ein erster Detektor vorgesehen sein, der dazu ausgebildet und angeordnet ist, das erste Peak zu erfassen, also dazu eingerichtet ist, im entsprechenden Teilspektrum Raman-Strahlung zu erfassen. Ergänzend hierzu kann ein zweiter Detektor vorgesehen sein, der korrespondierend dazu ausgebildet und angeordnet ist, das zweite Peak zu erfassen. Durch das im Wesentlichen gleichzeitige Erfassen des ersten und zweiten Peaks liegen zwischen diesen keine unterschiedlichen Beeinflussungen durch veränderliche Umgebungsbedingungen wie beispielsweise veränderlicher Druck und/oder Temperatur vor. Dementsprechend ist eine Kompensation in dieser Hinsicht entbehrlich. Infolge des im Wesentlichen gleichzeitigen Erfassen des ersten und zweiten Peaks ist das Kernspin-Isomer-Verhältnis in Echtzeit erfassbar. Die Verwendung eines ersten und zweiten Detektors bietet ferner hardwareseitig Redundanz. Bei Komponenten, die nur zwei Kernspin-Isomere aufweisen kann beispielsweise ein Notbetrieb mit nur einem der Detektoren aufrechterhalten werden. Wenn der erste und zweite Detektor funktionstüchtig ist, ist das Kernspin-Isomer-Verhältnis in vereinfachter Weise ermittelbar. Ebenso ist eine aufwendige Probenaufbereitung entbehrlich. Das beanspruchte Verfahren ist somit robust, schnell und dadurch insbesondere für großtechnische Prozesse geeignet.

In einer weiteren Ausführungsform des beanspruchten Verfahrens kann dieses mittels eines Raman-Photometers durchgeführt werden, das gemäß einer der oben beschriebenen Ausführungsformen ausgebildet ist. Die Merkmale des beanspruchten Raman-Photometers sind somit ohne Weiteres auf das beanspruchte Verfahren und umgekehrt übertragbar. Die technischen Vorzüge des beanspruchten Raman-Photometers werden analog mit dem beanspruchten Verfahren erzielt.

Die eingangs beschriebene Aufgabe wird ebenso durch ein erfindungsgemäßes Computerprogrammprodukt gelöst. Das Computerprogrammprodukt ist auf einem nicht-transienten Speicher gespeichert und ist mittels eines Prozessors ausführbar. Das Computerprogrammprodukt umfasst Programmcode, der dazu ausgebildet ist, bei Ausführung durch den Prozessor Verfahrensschritt durchzuführen. Der Prozessor kann beispielsweise zu einer Steuereinheit gehören, insbesondere einer Steuereinheit eines Raman-Photometers. Das Computerprogrammprodukt ist dazu ausgebildet, Messsignale von zumindest einem Detektor zu empfangen und zu verarbeiten. Hierzu kann das Computerprogrammprodukt mit einer Datenschnittstelle versehen sein, die als sogenanntes Application Programming Interface, kurz API, ausgebildet sein kann. Erfindungsgemäß ist dazu Computerprogrammprodukt, also der dazu gehörige Programmcode, dazu ausgebildet, ein Verfahren gemäß einer der oben dargelegten Ausführungsformen durchzuführen. Die Merkmale des beanspruchten Verfahrens, und demzufolge auch die des beanspruchten Raman-Photometers, sind analog auf das beanspruchte Computerprogrammprodukt übertragbar.

Ferner wird die Aufgabenstellung, die oben beschrieben wird, durch eine erfindungsgemäße Verwendung einer Messvorrichtung gelöst, mit der ein Kernspin-Isomer-Verhältnis in molekularem Wasserstoff erfasst wird. Der molekulare Wasserstoff, in dem das Kernspin-Isomer-Verhältnis erfasst wird, wird in einer Verflüssigungsanlage verflüssigt. Die Messvorrichtung ist dazu ausgebildet, den Verflüssigungsprozess des molekularen Wasserstoffs zu überwachen. Erfindungsgemäß ist die Messvorrichtung, die dazu eingesetzt wird, als Raman-Photometer ausgebildet. Insbesondere kann das verwendete Raman-Photometer nach einer der oben skizzierten Ausführungsformen ausgebildet sein. Die technischen Merkmale und Vorzüge des beanspruchten Raman-Photometers sind daher analog auf die beanspruchte Verwendung übertragbar.

Die zugrundeliegende Aufgabe wird gleichermaßen durch ein erfindungsgemäßes Simulationsverfahren gelöst, das zum Nachstellen eines Betriebsverhaltens eines Raman-Photometers ausgebildet ist. Das Simulationsverfahren umfasst einen ersten Schritt, in dem ein Datensatz bereitgestellt wird, durch den eine Funktionsweise des zu simulierenden Raman-Photometers zumindest teilweise nachstellbar ist. Der Datensatz kann hierbei einen Aufbau des Raman-Photometers nachstellen und/oder dessen Funktionen in Form eines Rechenmodells nachbilden. Der Datensatz kann hierbei eine virtuelle Repräsentanz des zu simulierenden Raman-Photometers darstellen. Zum Simulationsverfahren gehört weiter ein zweiter Schritt, in dem ein Betriebsparameter vorgegeben wird, durch den das zu simulierende Betriebsverhalten charakterisiert ist. Der zumindest eine Betriebsparameter kann beispielsweise Parameter umfassen, durch die eine dem simulierten Raman-Photometer zugeführte Stoffprobe in puncto Zusammensetzung und/oder ihrer physikalischen Eigenschaften wie Temperatur, Druck, oder eine Kombination hieraus. Alternativ oder ergänzend kann auch eine Einstellung des zu simulierenden Raman-Photometers einen Betriebsparameter darstellen. Darüber hinaus gehört ein dritter Schritt zum beanspruchten Simulationsverfahren, in dem eine Simulationsprogrammprodukt ausgeführt wird, mit dem zumindest ein Leistungsparameter ermittelt wird. Der zumindest eine Leistungsparameter wird hierbei basierend auf dem Datensatz ermittelt, der im ersten Schritt bereitgestellt wird, und dem zumindest einen Betriebsparameter, der im zweiten Schritt vorgegeben wird. Unter dem Leistungsparameters ist jegliche Größe zu verstehen, durch die das Resultat eines Messbetriebs des simulierten Raman-Photometers, also dessen virtueller Repräsentanz, wiedergegeben wird. Der Leistungsparameter kann beispielsweise ein durch die virtuelle Repräsentanz ermitteltes Kernspin-Isomer-Verhältnis sein, oder eine Abweichung zwischen dem ermittelten Kernspin-Isomer-Verhältnis und der durch den Betriebsparameter vorgegebene Zusammensetzung der Stoffprobe, also deren virtueller Repräsentanz. Das Simulationsprogrammprodukt kann hierbei als Digitaler Zwilling des simulierten Raman-Photometers ausgebildet sein. Insbesondere kann das Simulationsprogrammprodukt als Digitaler Zwilling gemäß US 2017/0286572 A1 ausgebildet sein. Der Offenbarungsgehalt von US 2017/0286572 A1 wird durch Verweisung in die vorliegende Anmeldung miteinbezogen. Insbesondere kann das Simulationsprogrammprodukt ein Physik-Modul umfassen, mit dem das Betriebsverhalten des simulierten Raman-Photometers und der virtuellen Repräsentanz einer diesem zugeführten Stoffprobe nachzustellen. Das Physik-Modul kann dazu ausgebildet sein, ein Emissionsverhalten zumindest eines Kernspin-Isomers einer Komponente der Stoffprobe in Form geeigneter virtueller Repräsentanzen nachzustellen. Ebenso kann das Physik-Modul dazu ausgebildet sein, ein optisches Verhalten im simulierten Raman-Photometer nachzustellen, beispielsweise ein Ausbreitungsverhalten von Raman-Strahlung und/oder eine Filterwirkung eines Bandpassfilters auf die Raman-Strahlung. Ferner kann das Physik-Modul dazu ausgebildet ein, ein Messbetriebsverhalten eines Detektors nachzustellen, auf den eine virtuelle Repräsentanz einer Raman-Strahlung einfällt.

Weiter gehört ein vierter Schritt zum beanspruchten Verfahren, in dem der im dritten Schritt ermittelte, zumindest eine Leistungsparameter an einen Benutzer und/oder eine Datenschnittstelle ausgegeben wird. Die Datenschnittstelle kann dazu ausgebildet sein, das Simulationsprogrammprodukt mit einem Steuerungsprogramm zu koppeln, mit dem ein zugrundeliegender technischer Prozess gesteuert wird, in dem das zugrundeliegende physikalische Raman-Photometer eingesetzt wird. Eine solches Steuerungsprogramm kann beispielsweise zum Steuern einer Verflüssigungsanlage für molekularen Wasserstoff sein. Durch ein Zusammenwirken des Simulationsprogrammprodukts und des Steuerungsprogramms können durch das zugrundeliegende physikalische Raman-Photometer ermittelte Kernspin-Isomer-Verhältnisse aus Plausibilität geprüft werden. Dementsprechend ist der Betrieb des zugrundeliegenden technischen Prozesses mittels des Simulationsprogrammprodukts bzw. dem beanspruchten Simulationsverfahren überwachbar.

Erfindungsgemäß ist das Raman-Photometer, dessen Betrieb im Simulationsverfahren nachgestellt wird, gemäß einer der oben skizzierten Ausführungsformen ausgebildet sein. Die Merkmale und technischen Vorzüge des oben dargestellten Raman-Photometers sind somit ohne Weiteres auf das Simulationsverfahren übertragbar.

Das Raman-Photometer, das mit dem beanspruchten Simulationsverfahren nachgestellt wird, ist in seinem Aufbau und seiner Funktionsweise besonders einfach und robust. Insbesondere können Störeinflüsse, die auf die zugeführte Stoffprobe, und damit auch auf ihre virtuelle Repräsentanz, einwirken, in einer Vielzahl an Fällen vernachlässigbar. Beispielsweise ist eine exakte Simulation einer Probenaufbereitung im Wesentlichen entbehrlich. Darüber hinaus sind das Raman-Emissionsverhalten einer Vielzahl an Stoffen sowie das optische Ausbreitungsverhalten von Raman-Strahlung in einfacher Weise berechenbar, beispielsweise algebraisch. Ebenso ist das Messbetriebsverhalten von Detektoren, insbesondere von Photomultipliern, mit reduziertem Rechenaufwand nachstellbar. Das erfindungsgemäße Simulationsverfahren bietet somit bei einem Minimum an Rechenaufwand ein erhöhtes Maß an Realitätstreue. Infolgedessen ist das erfindungsgemäße Simulationsverfahren echtzeitfähig und dazu geeignet, durch Überwachung eines physikalischen Raman-Photometers einen großtechnischen Prozess wie eine Verflüssigungsanlage für molekularen Wasserstoff zuverlässig zu überwachen. Dies wiederum gewährleistet einen wirtschaftlichen und sicheren Betrieb einer derartigen Verflüssigungsanlage.

Die oben dargestellte Aufgabenstellung wird ebenso durch ein erfindungsgemäßes Simulationsprogrammprodukt gelöst. Das Simulationsprogrammprodukt ist dazu ausgebildet, ein Betriebsverhalten eines Raman-Photometers nachzustellen. Das Simulationsprogrammprodukt ist auf einem nicht-transienten Speicher gespeichert und ist mittels eines Prozessors ausführbar. Des Weiteren umfasst das Simulationsprogrammprodukt Programmcode, der dazu ausgebildet ist, bei einer Ausführung mit dem Prozessor Verfahrensschritte eines Simulationsverfahrens durchzuführen. Das Simulationsprogrammprodukt ist erfindungsgemäß dazu ausgebildet, ein Simulationsverfahren nach einer der oben beschriebenen Ausführungsformen durchzuführen. Die Merkmale des Simulationsverfahrens sind daher ohne Weiteres auf das beanspruchte Simulationsprogrammprodukt übertragbar.

Die Erfindung wird im Folgenden anhand einzelner Ausführungsformen in Figuren näher erläutert. Die Figuren sind insoweit in gegenseitiger Ergänzung zu lesen, dass gleiche Bezugszeichen in unterschiedlichen Figuren die gleiche technische Bedeutung haben. Die Merkmale der einzelnen Ausführungsformen sind untereinander auch kombinierbar. Ferner sind die Merkmale der in den Figuren gezeigten Ausführungsformen mit den oben skizzierten Merkmalen kombinierbar. Es zeigen im Einzelnen:
- FIG 1: einen schematischen Aufbau einer ersten Ausführungsform des beanspruchten Raman-Photometers;
- FIG 2: ein Diagramm, das einen Schritt einer Ausführungsform des beanspruchten Verfahrens näher zeigt;
- FIG 3: einen schematischen Aufbau einer zweiten Ausführungsform des beanspruchten Raman-Photometers;
- FIG 4: einen schematischen Aufbau einer dritten Ausführungsform des beanspruchten Raman-Photometers;
- FIG 5: eine Detaildarstellung der vierten Ausführungsform des beanspruchten Raman-Photometers;
- FIG 6: ein Ablaufdiagramm einer Ausführungsform des beanspruchten Simulationsverfahrens.

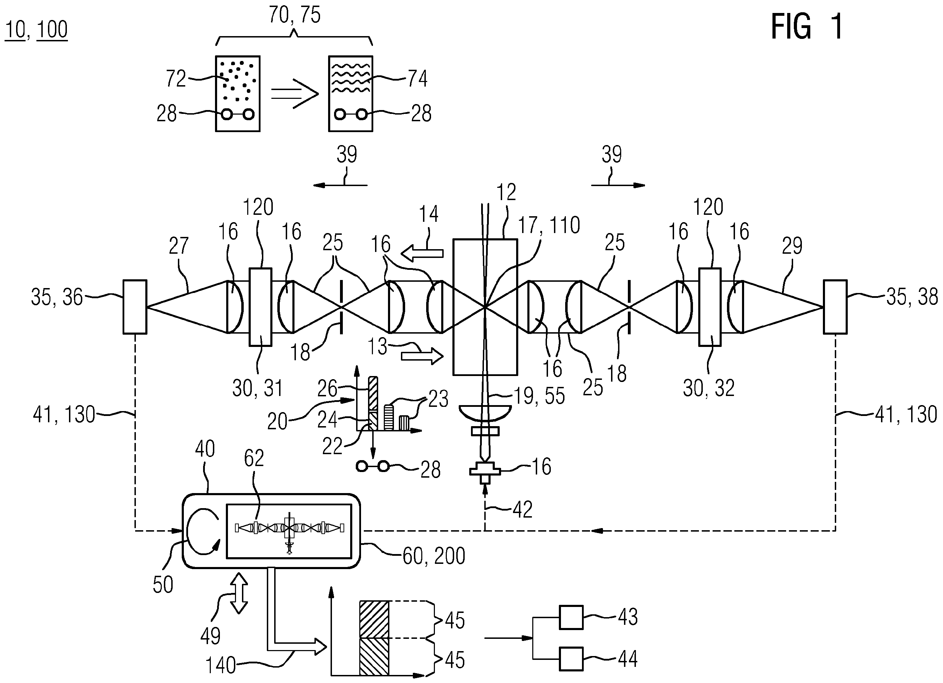

In FIG 1 ist schematisch ein Aufbau einer ersten Ausführungsform des beanspruchten Raman-Photometers 10 dargestellt. Das Raman-Photometer 10 umfasst eine Messzelle 12, in die eine Stoffprobe 20 einleitbar und ausleitbar ist, wobei die Stoffprobe 20 die Messzelle 12 durchströmen kann. Die Einleitung der Stoffprobe 20 ist durch den Pfeil 13 symbolisiert und die Ausleitung der Stoffprobe 20 durch den Pfeil 14. Die Stoffprobe 20 umfasst zumindest eine Komponente 22, die ein erstes und ein zweites Kernspin-Isomer 24, 26 aufweist. Weiter umfasst die Stoffprobe 20 weitere Komponenten 23, die Verunreinigungen darstellen. Die Komponente 22 mit dem ersten und zweiten Kernspin-Isomer 24, 26 ist in FIG 1 molekularer Wasserstoff 28. Das erste Kernspin-Isomer 24 ist sogenannter Ortho-Wasserstoff und das zweite Kernspin-Isomer 26 sogenannter Para-Wasserstoff. Das Raman-Photometer 10 weist eine Lichtquelle 16 auf, die als Laser ausgebildet ist, durch den die Komponente 22 der Stoffprobe 20, also der molekulare Wasserstoff 28, zum Emittieren von Raman-Strahlung 25 anregbar ist. Die Messzelle 12 ist dazu ausgebildet, dass die angeregte Raman-Strahlung 25 aus der Messzelle 12 austreten kann. Gemäß der Ausführungsform in FIG 1 tritt die Raman-Strahlung 25 beidseitig aus der Messzelle 12 aus und breitet sich entlang auf beiden Seiten der Messzelle 12 entlang einer Ausbreitungsrichtung 39 aus. Über entsprechende Linsen 16 wird die Raman-Strahlung 25 auf beiden Seiten der Messzelle 12 durch eine Blende 18 gelenkt und über eine entsprechende Linse 16 jeweils auf einen Bandpassfilter 30. Im Einzelnen umfasst das Raman-Photometer 10 einen ersten Bandpassfilter 31 der für ein erstes Teilspektrum 27 der Raman-Strahlung 25 transparent ist. Korrespondierend weist das Raman-Photometer 10 einen zweiten Bandpassfilter 32 auf, der für ein zweites Teilspektrum 29 der Raman-Strahlung 25 transparent ist. Entlang der jeweiligen Ausbreitungsrichtung 39 ist hinter dem ersten und zweiten Bandpassfilter 31, 32 eine Linse 16 angeordnet, durch die das erste bzw. zweite Teilspektrum 27, 29 der Raman-Strahlung 25 auf einen Detektor 35 gelenkt wird. Das erste Teilspektrum 27 wird hierbei zu einem ersten Detektor 36 und das zweite Teilspektrum 29 zu einem zweiten Detektor 37 gelenkt. Zumindest einer der Detektoren 35 ist hierbei als Photomultiplier ausgebildet.

Ferner umfasst das Raman-Photometer 10 eine Steuereinheit 40, die zumindest mit den Detektoren 35 gekoppelt ist und dazu ausgebildet ist, von den Detektoren 35 Messsignale 41 zu empfangen. Weiter ist die Steuereinheit 40 dazu ausgebildet, die Lichtquelle 16 über Steuerbefehle 42 anzusteuern. Die Lichtquelle 16 ist durch die Steuersignale 42 unter anderem durchstimmbar und/oder in puncto Emissionsintensität einstellbar. Insbesondere ist die Anregungswellenlänge 55 des von der Lichtquelle 16 emittierten Lichts 19 vorgebbar. Auf der Steuereinheit 40 ist auf einem nicht-transienten Speicher ein Computerprogrammprodukt 50 ausführbar gespeichert, mit den eine Ausführungsform des beanspruchten Verfahrens 100 durchführbar ist. Ebenso ist ein Simulationsprogrammprodukt 60 auf der Steuereinheit 40 ausführbar gespeichert, das einen Datensatz 62 umfasst, der zu einer virtuellen Repräsentanz des Raman-Photometers 10 gehört. Das Simulationsprogrammprodukt 60 ist dazu eingerichtet, ein Simulationsverfahren 200 durchzuführen, mit dem das Betriebsverhalten des Raman-Photometers 10 nachstellbar ist. Ferner ist die Steuereinheit 40 dazu ausgebildet, eine Prozesskommunikation 49 durchzuführen, über die sie mit einer Verflüssigungsanlage 70 kommuniziert, in der das Raman-Photometer 10 eingesetzt wird. Die Verflüssigungsanlage 70 führt eine Verflüssigung 75 durch, so dass der molekulare Wasserstoff 28 von einer Gasphase 72 in eine Flüssigphase 74 überführt wird. Über die Prozesskommunikation 49 sind Daten aus dem Verfahren 100 zum Betreiben des Raman-Photometers 10 und/oder aus dem Simulationsverfahren 200 übertragbar, und basierend hierauf der Betrieb der Verflüssigungsanlage 70 steuerbar. Ferner ist die Steuereinheit 40 mit einer Anzeigevorrichtung 43 und einer Datenschnittstelle 44 gekoppelt.

In einer ersten Ausführungsform des beanspruchten Verfahrens 100, die mit dem Raman-Photometer 10 durchgeführt wird, wird ein erster Schritt 110 durchgeführt, in dem Raman-Photometer 10 die Stoffprobe 20 zugeführt wird, also in die Messzelle 12 eingeleitet. Weiter wird die zugeführte Stoffprobe 20 mit der Lichtquelle 16 angeregt, die Raman-Strahlung 25 zu emittieren. Die Anregung 17 der Stoffprobe 20 mittels Licht 19 ist darauf gerichtet, im molekularem Wasserstoff 28 als Komponente 22 der Stoffprobe 20 Raman-Strahlung 25 zu verursachen, die ein Unterscheiden dessen ersten und zweiten Kernspin-Isomers 24, 26 erlaubt.

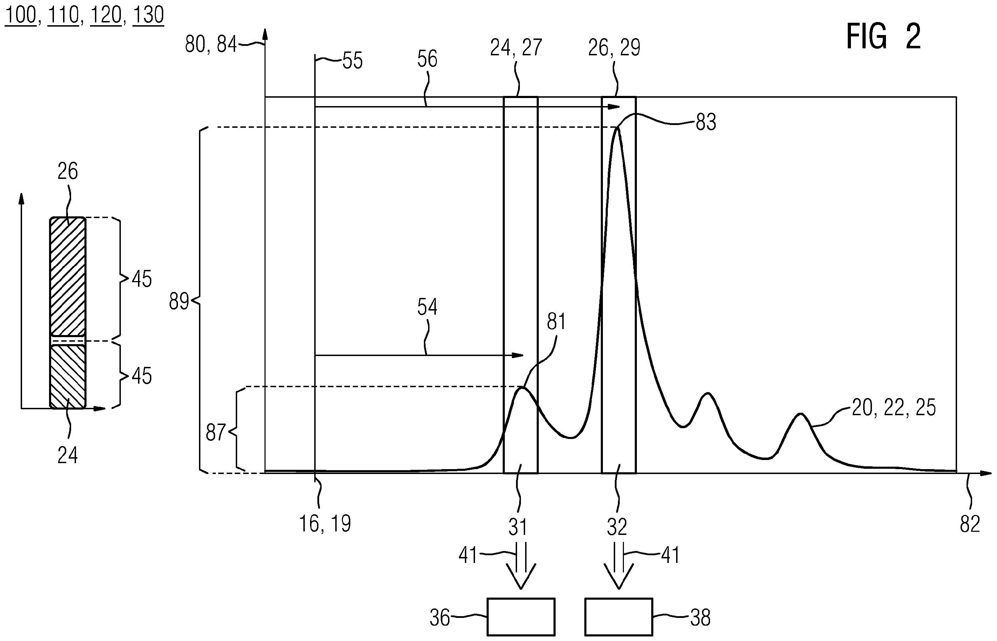

In einem zweiten Schritt 120 des beanspruchten Verfahrens 100 wird die Raman-Strahlung 25 durch den ersten bzw. zweiten Bandpassfilter 31, 32 gefiltert. Durch das Filtern mit dem ersten Bandpassfilter 31 wird lediglich das erste Teilspektrum 27 der Raman-Strahlung 25 zum ersten Detektor 36 transmittiert. Korrespondierend wird durch das Filtern mit dem zweiten Bandpassfilter 38 lediglich das zweite Teilspektrum 29 der Raman-Strahlung 25 zum zweiten Detektor 38 transmittiert. In einem dritten Schritt 130 wird im ersten Teilspektrum 27 mit dem ersten Detektor 36 ein erstes Peak 81 erfasst, wie beispielsweise näher in FIG 2 dargestellt. Das erste Peak 81 ist charakteristisch für das erste Kernspin-Isomer 24, also Ortho-Wasserstoff. Im Wesentlichen gleichzeitig zum ersten Kernspin-Isomer 26 wird im zweiten Teilspektrum 29 ein zweites Peak 83, wie in FIG 2 detaillierter gezeigt, mit dem zweiten Detektor 38 erfasst. Das zweite Peak 83 ist hierbei charakteristisch für das zweite Kernspin-Isomer 26, also Para-Wasserstoff. Durch das Erfassen mit dem ersten und zweiten Detektor 36, 38 werden jeweils Messsignale 41 erzeugt, die ein Maß für die Konzentrationen des ersten bzw. zweiten Kernspin-Isomers 24, 26 darstellen. Die Messsignale 41 werden zu einer weiteren Verarbeitung an die Steuereinheit 40 übertragen.

In einem vierten Schritt des Verfahrens 100 wird das Kernspin-Isomer-Verhältnis 45 ermittelt. Dazu werden das erfasste erste Peak 81 und das zweite Peak 83, also die damit zusammenhängenden Messsignale 41, rechnerisch ausgewertet, also aus diesen ein Quotient gebildet. Das Kernspin-Isomer-Verhältnis 45 wird weiter im vierten Schritt 140 über die Anzeigevorrichtung 43 an einen Benutzer ausgegeben. Alternativ oder ergänzend wird das ermittelte Kernspin-Isomer-Verhältnis 45 über eine Datenschnittstelle 44 ausgegeben, die beispielsweise eine Verbindung zum Simulationsprogrammprodukt 60 und/oder zur Prozesskommunikation 49 hergestellt wird. Der Betrieb des Raman-Photometers 10 nach FIG 1 wird betriebsbegleitend durch das Simulationsprogrammprodukt 60, das als Digitaler Zwilling ausgebildet ist, überwacht.

Der dritte Schritt 130 des Verfahrens 100, das in FIG 1 durchgeführt wird, ist in FIG 2 detailliert gezeigt. Das in FIG 2 gezeigte Stadium des Verfahrens 100 geht davon aus, dass der erste und zweite Schritt 110, 120, wie beispielsweise in FIG 1 gezeigt, erfolgreich durchgeführt sind. Im Einzelnen zeigt FIG 2 ein Diagramm 80, das eine horizontale Wellenlängenachse 82 und eine vertikale Intensitätsachse 84 umfasst. Im Diagramm 80 wird der dritte Schritt 130 näher dargestellt. Im Diagramm 80 ist ein Spektrum der Raman-Strahlung 25 gezeigt, die durch die Komponente 22 der Stoffprobe 20 mit dem ersten und zweiten Kernspin-Isomer 24, 26 infolge einer Anregung 17 mit einer Lichtquelle 16 hervorgerufen wird. Der erste Bandpassfilter 31 ist für das erste Teilspektrum 27 der Raman-Strahlung 25 transparent ausgebildet. Das transparente erste Teilspektrum 27 liegt im Wesentlichen im Wellenlängenbereich des ersten Peaks 81, das durch das erste Kernspin-Isomer 24, also Ortho-Wasserstoff, hervorgerufen wird. In korrespondierender Weise liegt das transparente zweite Teilspektrum 29 im Wesentlichen im Wellenlängenbereich des zweiten Peaks 83, das durch das zweite Kernspin-Isomer 26 hervorgerufen wird. Der zweite Bandpassfilter 32 ist dementsprechend im zweiten Teilspektrum 29 der Raman-Strahlung 25 transparent ausgebildet. Die Lage des ersten Peaks 81 ist als erste relative Wellenlängenverschiebung 54 gegenüber einer Anregungswellenlänge des Lichts 19 der Lichtquelle 16 definiert. Korrespondierend ist die Lage des zweiten Peaks 83 als zweite relative Wellenlängenverschiebung 56 gegenüber der Anregungswellenlänge 55 definiert. Im dritten Schritt wird das erste Teilspektrum 27 zum ersten Detektor 36 gelenkt und dadurch ein erstes Maximum 87, also eine erste Amplitude, des ersten Peaks 81 erfasst. Ebenso wird das zweite Teilspektrum 29 zum zweiten Detektor 38 gelenkt und dadurch ein zweites Maximum 89, also eine Amplitude, des zweiten Peaks 83 erfasst. Zum ersten und zweiten Maximum 87, 89 werden korrespondierende Messsignale 41 erzeugt, die an die Steuereinheit 40 übertragbar sind und auswertbar sind. Das Messsignal 41, das das erste Maximum 87 wiedergibt, quantifiziert eine Konzentration des ersten Kernspin-Isomers 24 und das Messsignal 41, das das zweite Maximum 89 wiedergibt, quantifiziert eine Konzentration des zweiten Kernspin-Isomers 26. Hieraus ist im vierten Schritt 140 des Verfahrens 100 das Kernspin-Isomer-Verhältnis 45 der Komponente 22 in der Stoffprobe 20 ermittelbar.

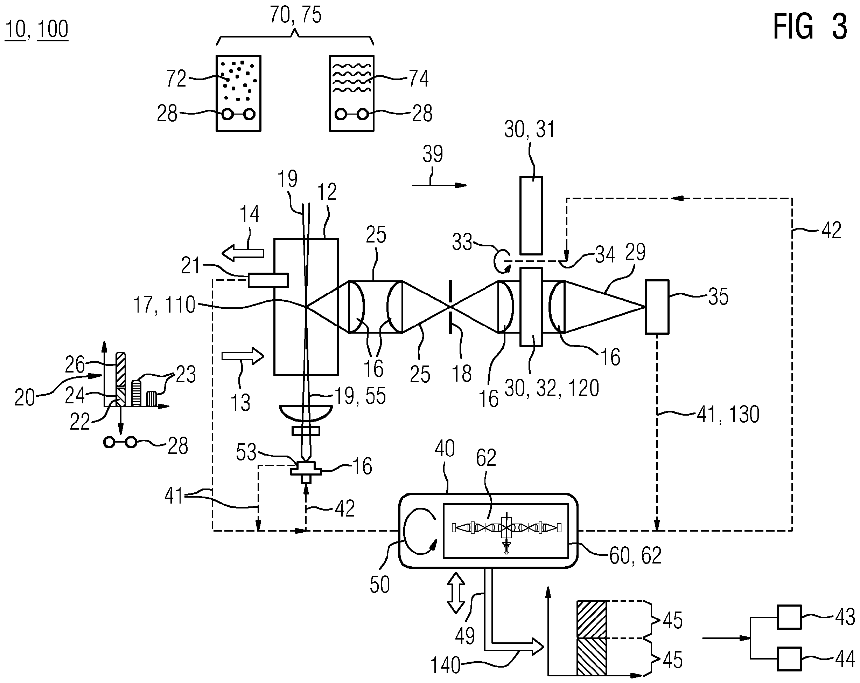

In FIG 3 ist schematisch ein Aufbau einer zweiten Ausführungsform des beanspruchten Raman-Photometers 10 dargestellt. Das Raman-Photometer 10 umfasst eine Messzelle 12, in die eine Stoffprobe 20 einleitbar und ausleitbar ist, wobei die Stoffprobe 20 die Messzelle 12 durchströmen kann. Die Messzelle 12 ist mit einem Sensor 21 versehen, mit dem ein darin vorliegender Druck erfassbar ist. Der Sensor 21 ist dazu ausgebildet, entsprechende Messsignale 41 an eine Steuereinheit 40 zu übertragen. Die Einleitung der Stoffprobe 20 ist durch den Pfeil 13 symbolisiert und die Ausleitung der Stoffprobe 20 durch den Pfeil 14. Die Stoffprobe 20 umfasst zumindest eine Komponente 22, die ein erstes und ein zweites Kernspin-Isomer 24, 26 aufweist. Weiter umfasst die Stoffprobe 20 weitere Komponenten 23, die Verunreinigungen darstellen. Die Komponente 22 mit dem ersten und zweiten Kernspin-Isomer 24, 26 ist in FIG 3 molekularer Wasserstoff 28. Das erste Kernspin-Isomer 24 ist sogenannter Ortho-Wasserstoff und das zweite Kernspin-Isomer 26 sogenannter Para-Wasserstoff. Das Raman-Photometer 10 weist eine Lichtquelle 16 auf, die als Laser ausgebildet ist, durch den die Komponente 22 der Stoffprobe 20, also der molekulare Wasserstoff 28, zum Emittieren von Raman-Strahlung 25 anregbar ist. Die Lichtquelle 16 ist mit einem Laserleistungssensor 53 ausgestattet, der dazu ausgebildet ist, die in die Messzelle 12 eingebrachte Lichtemission zu vermessen. Die Messzelle 12 ist dazu ausgebildet, dass die angeregte Raman-Strahlung 25 aus der Messzelle 12 austreten kann. Gemäß der Ausführungsform in FIG 3 tritt die Raman-Strahlung 25 einseitig aus der Messzelle 12 aus und breitet sich entlang einer Ausbreitungsrichtung 39 aus. Über entsprechende Linsen 16 wird die Raman-Strahlung 25 durch eine Blende 18 gelenkt und über eine entsprechende Linse 16 auf einen Bandpassfilter 30. Das Raman-Photometer 10 umfasst einen ersten und einen zweiten Bandpassfilter 31, 32, die in einem Revolvermechanismus 34 angeordnet sind. Der erste und zweite Bandpassfilter 31, 32 sind vorgebbar entlang der Ausbreitungsrichtung 39 der Raman-Strahlung 25 zwischen der Messzelle 12 und einem Detektor 35 positionierbar. Ein derartiger Wechsel 33 ist durch entsprechende Steuerbefehle 42 von der Steuereinheit 40 vorgebbar.

Im Einzelnen umfasst das Raman-Photometer 10 einen ersten Bandpassfilter 31 der für ein erstes Teilspektrum 27 der Raman-Strahlung 25 transparent ist. Korrespondierend weist das Raman-Photometer 10 einen zweiten Bandpassfilter 32 auf, der für ein zweites Teilspektrum 29 der Raman-Strahlung 25 transparent ist. Das erste und zweite Teilspektrum 27, 29 sind hierbei abwechselnd zum Detektor 35 lenkbar, der als Photomultiplier ausgebildet sein kann.

Ferner umfasst das Raman-Photometer 10 eine Steuereinheit 40, die mit dem Detektoren 35 gekoppelt ist und dazu ausgebildet ist, vom Detektor 35 Messsignale 41 zu empfangen. Weiter ist die Steuereinheit 40 dazu ausgebildet, die Lichtquelle 16 über Steuerbefehle 42 anzusteuern. Die Lichtquelle 16 ist durch die Steuersignale 42 unter anderem durchstimmbar und/oder in puncto Emissionsintensität einstellbar. Insbesondere ist die Anregungswellenlänge 55 des von der Lichtquelle 16 emittierten Lichts 19 vorgebbar. Auf der Steuereinheit 40 ist auf einem nicht-transienten Speicher ein Computerprogrammprodukt 50 ausführbar gespeichert, mit den eine Ausführungsform des beanspruchten Verfahrens 100 durchführbar ist. Ebenso ist ein Simulationsprogrammprodukt 60 auf der Steuereinheit 40 ausführbar gespeichert, das einen Datensatz 62 umfasst, der zu einer virtuellen Repräsentanz des Raman-Photometers 10 gehört. Das Simulationsprogrammprodukt 60 ist dazu eingerichtet, ein Simulationsverfahren 200 durchzuführen, mit dem das Betriebsverhalten des Raman-Photometers 10 nachstellbar ist. Ferner ist die Steuereinheit 40 dazu ausgebildet, eine Prozesskommunikation 49 durchzuführen, über die sie mit einer Verflüssigungsanlage 70 kommuniziert, in der das Raman-Photometer 10 eingesetzt wird. Die Verflüssigungsanlage 70 führt eine Verflüssigung 75 durch, so dass der molekulare Wasserstoff 28 von einer Gasphase 72 in eine Flüssigphase 74 überführt wird. Über die Prozesskommunikation 49 sind Daten aus dem Verfahren 100 zum Betreiben des Raman-Photometers 10 und/oder aus dem Simulationsverfahren 200 übertragbar, und basierend hierauf der Betrieb der Verflüssigungsanlage 70 steuerbar. Ferner ist die Steuereinheit 40 mit einer Anzeigevorrichtung 43 und einer Datenschnittstelle 44 gekoppelt. In einer zweiten Ausführungsform des beanspruchten Verfahrens 100, die mit dem Raman-Photometer 10 durchgeführt wird, wird ein erster Schritt 110 durchgeführt, in dem Raman-Photometer 10 die Stoffprobe 20 zugeführt wird, also in die Messzelle 12 eingeleitet. Weiter wird die zugeführte Stoffprobe 20 mit der Lichtquelle 16 angeregt, die Raman-Strahlung 25 zu emittieren. Die Anregung 17 der Stoffprobe 20 mittels Licht 19 ist darauf gerichtet, im molekularem Wasserstoff 28 als Komponente 22 der Stoffprobe 20 Raman-Strahlung 25 zu verursachen, die ein Unterscheiden dessen ersten und zweiten Kernspin-Isomers 24, 26 erlaubt.

In einem zweiten Schritt 120 des beanspruchten Verfahrens 100 wird die Raman-Strahlung 25 nacheinander durch den ersten und zweiten Bandpassfilter 31, 32 gefiltert. Durch das Filtern mit dem ersten Bandpassfilter 31 wird lediglich das erste Teilspektrum 27 der Raman-Strahlung 25 zum Detektor 35 transmittiert. Die Raman-Strahlung 25 wird so lange durch den ersten Bandpassfilter 31 gelenkt, bis das transmittierte erste Teilspektrum 27 durch den Detektor 35 im dritten Schritt 130 erfasst ist. Daraufhin erfolgt ein Wechsel 33 auf den zweiten Bandpassfilter 32, durch den das zweite Teilspektrum 29 der Raman-Strahlung 25 zum Detektor 35 transmittiert wird. Auch das zweite Teilspektrum 29 wird durch den Detektor 35 im dritten Schritt 130 erfasst. Der zweite und dritte Schritt 120, 130 erfolgen somit zumindest teilweise gleichzeitig.

Im dritten Schritt 130 wird im ersten Teilspektrum 27 mit dem Detektor 35 ein erstes Peak 81 erfasst, wie beispielsweise auch näher in FIG 2 dargestellt. Das erste Peak 81 ist charakteristisch für das erste Kernspin-Isomer 24, also Ortho-Wasserstoff. Zeitlich versetzt zur Erfassung des ersten Kernspin-Isomer 26 wird im dritten Schritt 130 im zweiten Teilspektrum 29 ein zweites Peak 83, wie in FIG 2 detaillierter gezeigt, mit dem Detektor 35 erfasst. Das zweite Peak 83 ist hierbei charakteristisch für das zweite Kernspin-Isomer 26, also Para-Wasserstoff. Durch das Erfassen mit dem Detektor 35 werden jeweils alternierend Messsignale 41 erzeugt, die ein Maß für die Konzentrationen des ersten bzw. zweiten Kernspin-Isomers 24, 26 darstellen. Die Messsignale 41 werden zu einer weiteren Verarbeitung an die Steuereinheit 40 übertragen. Das Raman-Photometer 10 weist damit ein Minimum an Hardware auf und ist besonders kompakt.

In einem vierten Schritt des Verfahrens 100 wird das Kernspin-Isomer-Verhältnis 45 ermittelt. Dazu werden das erfasste erste Peak 81 und das zweite Peak 83, also die damit zusammenhängenden Messsignale 41, rechnerisch ausgewertet, also aus diesen ein Quotient gebildet. Das Kernspin-Isomer-Verhältnis 45 wird weiter im vierten Schritt 140 über die Anzeigevorrichtung 43 an einen Benutzer ausgegeben. Alternativ oder ergänzend wird das ermittelte Kernspin-Isomer-Verhältnis 45 über eine Datenschnittstelle 44 ausgegeben, die beispielsweise eine Verbindung zum Simulationsprogrammprodukt 60 und/oder zur Prozesskommunikation 49 hergestellt wird. Der Betrieb des Raman-Photometers 10 nach FIG 3 wird betriebsbegleitend durch das Simulationsprogrammprodukt 60, das als Digitaler Zwilling ausgebildet ist, überwacht.

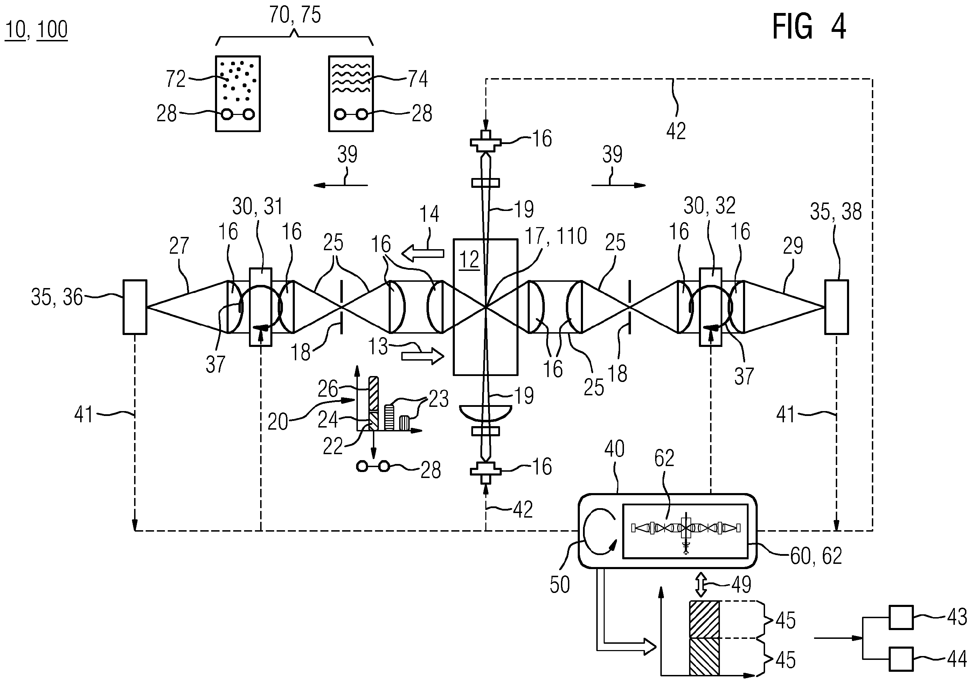

Ein Aufbau einer dritten Ausführungsform des beanspruchten Raman-Photometers 10 ist in FIG 4 schematisch dargestellt. Das Raman-Photometer 10 umfasst eine Messzelle 12, in die eine Stoffprobe 20 einleitbar und ausleitbar ist, wobei die Stoffprobe 20 die Messzelle 12 durchströmen kann. Die Einleitung der Stoffprobe 20 ist durch den Pfeil 13 symbolisiert und die Ausleitung der Stoffprobe 20 durch den Pfeil 14. Die Stoffprobe 20 umfasst zumindest eine Komponente 22, die ein erstes und ein zweites Kernspin-Isomer 24, 26 aufweist. Weiter umfasst die Stoffprobe 20 weitere Komponenten 23, die Verunreinigungen darstellen. Die Komponente 22 mit dem ersten und zweiten Kernspin-Isomer 24, 26 ist in FIG 4 molekularer Wasserstoff 28. Das erste Kernspin-Isomer 24 ist sogenannter Ortho-Wasserstoff und das zweite Kernspin-Isomer 26 sogenannter Para-Wasserstoff. Das Raman-Photometer 10 weist zwei Lichtquellen 16 auf, die jeweils als Laser ausgebildet sind, durch den die Komponente 22 der Stoffprobe 20, also der molekulare Wasserstoff 28, zum Emittieren von Raman-Strahlung 25 anregbar ist. Die Messzelle 12 ist dazu ausgebildet, dass die angeregte Raman-Strahlung 25 aus der Messzelle 12 austreten kann. Gemäß der Ausführungsform in FIG 4 tritt die Raman-Strahlung 25 beidseitig aus der Messzelle 12 aus und breitet sich entlang auf beiden Seiten der Messzelle 12 entlang einer Ausbreitungsrichtung 39 aus. Über entsprechende Linsen 16 wird die Raman-Strahlung 25 auf beiden Seiten der Messzelle 12 durch eine Blende 18 gelenkt und über eine entsprechende Linse 16 jeweils auf einen Bandpassfilter 30. Im Einzelnen umfasst das Raman-Photometer 10 einen ersten Bandpassfilter 31 der für ein erstes Teilspektrum 27 der Raman-Strahlung 25 transparent ist. Korrespondierend weist das Raman-Photometer 10 einen zweiten Bandpassfilter 32 auf, der für ein zweites Teilspektrum 29 der Raman-Strahlung 25 transparent ist.

Der erste und zweite Bandpassfilter 31, 32 sind jeweils kippbar gegenüber der Ausbreitungsrichtung 19 der Raman-Strahlung 25 ausgebildet. Der erste und zweite Bandpassfilter 31, 32 sind in einem Kippmechanismus 37 angeordnet. Durch Kippen des ersten bzw. zweiten Bandpassfilters 31, 32 ist deren Filterverhalten vorgebbar. Insbesondere ist das transparente erste bzw. zweite Teilspektrum 27, 29 des ersten bzw. zweiten Bandpassfilters 31, 32 einstellbar. Die Kippmechanismen 37 sind durch Steuerbefehle 42 von der Steuereinheit 40 einstellbar. Durch ein Verkippen der Bandpassfilter 31, 32 ist auch bei Verwendung von nur einer Lichtquelle 16 eine Raman-Linie für Ortho- bzw. Para-Wasserstoff gezielt einstellbar. Beispielsweise kann mit nur einem der Detektoren 35, 36, 38 das Kernspin-Isomer-Verhältnis ermittelt werden und mit dem anderen Detektor 35, 36, 38 Verunreinigungen im molekularen Wasserstoff gemessen werden.

Entlang der jeweiligen Ausbreitungsrichtung 39 ist hinter dem ersten und zweiten Bandpassfilter 31, 32 eine Linse 16 angeordnet, durch die das erste bzw. zweite Teilspektrum 27, 29 der Raman-Strahlung 25 auf einen Detektor 35 gelenkt wird. Das erste Teilspektrum 27 wird hierbei zu einem ersten Detektor 36 und das zweite Teilspektrum 29 zu einem zweiten Detektor 37 gelenkt. Zumindest einer der Detektoren 35 ist hierbei als Photomultiplier ausgebildet.

Ferner umfasst das Raman-Photometer 10 eine Steuereinheit 40, die zumindest mit den Detektoren 35 gekoppelt ist und dazu ausgebildet ist, von den Detektoren 35 Messsignale 41 zu empfangen. Weiter ist die Steuereinheit 40 dazu ausgebildet, die Lichtquelle 16 über Steuerbefehle 42 anzusteuern. Die Lichtquelle 16 ist durch die Steuersignale 42 unter anderem durchstimmbar und/oder in puncto Emissionsintensität einstellbar. Insbesondere ist die Anregungswellenlänge 55 des von der Lichtquelle 16 emittierten Lichts 19 vorgebbar. Auf der Steuereinheit 40 ist auf einem nicht-transienten Speicher ein Computerprogrammprodukt 50 ausführbar gespeichert, mit den eine Ausführungsform des beanspruchten Verfahrens 100 durchführbar ist. Ebenso ist ein Simulationsprogrammprodukt 60 auf der Steuereinheit 40 ausführbar gespeichert, das einen Datensatz 62 umfasst, der zu einer virtuellen Repräsentanz des Raman-Photometers 10 gehört. Das Simulationsprogrammprodukt 60 ist dazu eingerichtet, ein Simulationsverfahren 200 durchzuführen, mit dem das Betriebsverhalten des Raman-Photometers 10 nachstellbar ist. Ferner ist die Steuereinheit 40 dazu ausgebildet, eine Prozesskommunikation 49 durchzuführen, über die sie mit einer Verflüssigungsanlage 70 kommuniziert, in der das Raman-Photometer 10 eingesetzt wird. Die Verflüssigungsanlage 70 führt eine Verflüssigung 75 durch, so dass der molekulare Wasserstoff 28 von einer Gasphase 72 in eine Flüssigphase 74 überführt wird. Über die Prozesskommunikation 49 sind Daten aus dem Verfahren 100 zum Betreiben des Raman-Photometers 10 und/oder aus dem Simulationsverfahren 200 übertragbar, und basierend hierauf der Betrieb der Verflüssigungsanlage 70 steuerbar. Ferner ist die Steuereinheit 40 mit einer Anzeigevorrichtung 43 und einer Datenschnittstelle 44 gekoppelt.

In einer dritten Ausführungsform des beanspruchten Verfahrens 100, die mit dem Raman-Photometer 10 durchgeführt wird, wird ein erster Schritt 110 durchgeführt, in dem Raman-Photometer 10 die Stoffprobe 20 zugeführt wird, also in die Messzelle 12 eingeleitet. Weiter wird die zugeführte Stoffprobe 20 mit der Lichtquelle 16 angeregt, die Raman-Strahlung 25 zu emittieren. Die Anregung 17 der Stoffprobe 20 mittels Licht 19 ist darauf gerichtet, im molekularem Wasserstoff 28 als Komponente 22 der Stoffprobe 20 Raman-Strahlung 25 zu verursachen, die ein Unterscheiden dessen ersten und zweiten Kernspin-Isomers 24, 26 erlaubt.

In einem zweiten Schritt 120 des beanspruchten Verfahrens 100 wird die Raman-Strahlung 25 durch den ersten bzw. zweiten Bandpassfilter 31, 32 gefiltert. Durch das Filtern mit dem ersten Bandpassfilter 31 wird lediglich das erste Teilspektrum 27 der Raman-Strahlung 25 zum ersten Detektor 36 transmittiert. Korrespondierend wird durch das Filtern mit dem zweiten Bandpassfilter 38 lediglich das zweite Teilspektrum 29 der Raman-Strahlung 25 zum zweiten Detektor 38 transmittiert. Zum Filtern der Raman-Strahlung 25 wird zumindest der erste oder zweite Bandpassfilter 31, 32 gekippt und so das transmittierte erste bzw. zweite Teilspektrum 27, 29 eingestellt. In einem dritten Schritt 130 wird im ersten Teilspektrum 27 mit dem ersten Detektor 36 ein erstes Peak 81 erfasst, wie beispielsweise näher in FIG 2 dargestellt. Das erste Peak 81 ist charakteristisch für das erste Kernspin-Isomer 24, also Ortho-Wasserstoff. Im Wesentlichen gleichzeitig zum ersten Kernspin-Isomer 26 wird im zweiten Teilspektrum 29 ein zweites Peak 83, wie in FIG 2 detaillierter gezeigt, mit dem zweiten Detektor 38 erfasst. Das zweite Peak 83 ist hierbei charakteristisch für das zweite Kernspin-Isomer 26, also Para-Wasserstoff. Durch das Erfassen mit dem ersten und zweiten Detektor 36, 38 werden jeweils Messsignale 41 erzeugt, die ein Maß für die Konzentrationen des ersten bzw. zweiten Kernspin-Isomers 24, 26 darstellen. Die Messsignale 41 werden zu einer weiteren Verarbeitung an die Steuereinheit 40 übertragen.

In einem vierten Schritt des Verfahrens 100 wird das Kernspin-Isomer-Verhältnis 45 ermittelt. Dazu werden das erfasste erste Peak 81 und das zweite Peak 83, also die damit zusammenhängenden Messsignale 41, rechnerisch ausgewertet, also aus diesen ein Quotient gebildet. Das Kernspin-Isomer-Verhältnis 45 wird weiter im vierten Schritt 140 über die Anzeigevorrichtung 43 an einen Benutzer ausgegeben. Alternativ oder ergänzend wird das ermittelte Kernspin-Isomer-Verhältnis 45 über eine Datenschnittstelle 44 ausgegeben, die beispielsweise eine Verbindung zum Simulationsprogrammprodukt 60 und/oder zur Prozesskommunikation 49 hergestellt wird. Der Betrieb des Raman-Photometers 10 nach FIG 1 wird betriebsbegleitend durch das Simulationsprogrammprodukt 60, das als Digitaler Zwilling ausgebildet ist, überwacht.

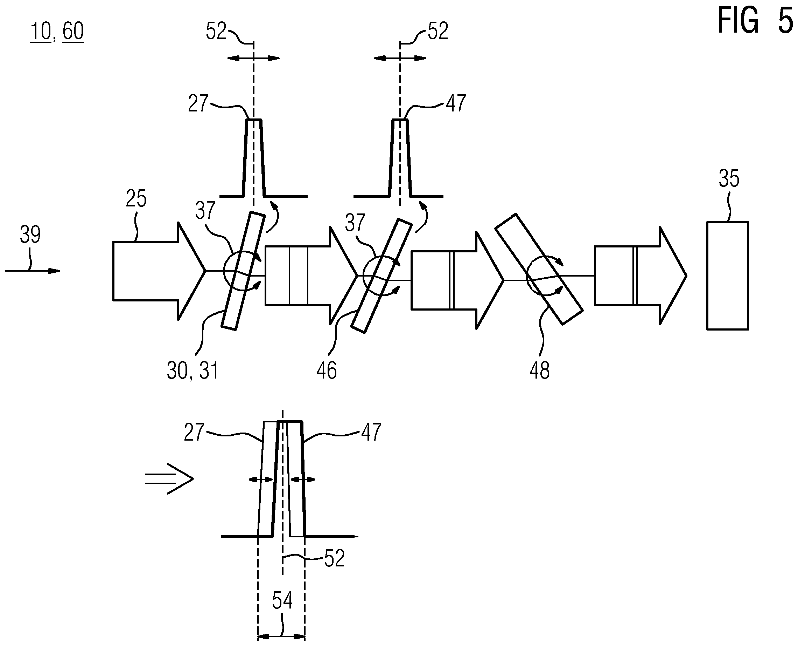

Zur dritten Ausführungsform des beanspruchten Raman-Photometers 10 ist in FIG 5 eine schematische Detailansicht gezeigt. Auf ein Bandpassfilter 30, exemplarisch das erste Bandpassfilter 31, fällt Raman-Strahlung 25 ein. Das Bandpassfilter 30 ist über einen Kippmechanismus 37 gegenüber der Ausbreitungsrichtung 39 der Raman-Strahlung 25 gekippt angeordnet. Der Bandpassfilter 30, also der erste Bandpassfilter 31, ist im ersten Teilspektrum 27 der Raman-Strahlung 25 transparent ausgebildet. Durch das Kippen ist die Zentralwellenlänge 52 des ersten Teilspektrums 27 vorgebbar. Im Einzelnen ist die Zentralwellenlänge 52 des ersten Teilspektrums 52 umso stärker zu niedrigen Wellenlängen verschoben, je stärker das Bandpassfilter 30 gekippt ist. Ferner ist der Bandpassfilter 30 mit einem Zusatz-Bandpassfilter 46 gekoppelt angeordnet, der ebenso über einen Kippmechanismus 37 gegenüber der Ausbreitungsrichtung 39 vorgebbar kippbar ist. Der Zusatz-Bandpassfilter 46 ist in einem Zusatz-Teilspektrum 47 für die Raman-Strahlung 25 transparent ausgebildet. Durch Kippen des Zusatz-Bandpassfilters 46 ist die Zentralwellenlänge 52 des Zusatz-Teilspektrums 47 vorgebbar. Durch die überlagerte Wirkung des Bandpassfilters 30 und des Zusatz-Bandpassfilters 46 ergibt sich ein verengtes transparentes Teilspektrum, wie in FIG 5 unten dargestellt. Dadurch ist eine Einengung des Bandpasses erreichbar, die dem zu erfassenden Peak 81, 83 entspricht. Dementsprechend ist durch das Kippen des Bandpassfilters 30 und des zugehörigen Zusatz-Bandpassfilters 46 die Zentralwellenlänge 52 und eine Halbwertsbreite 54 des entsprechend verengten Teilspektrums vorgebbar. Darüber hinaus wird durch das Zusammenspiel des verkippten ersten Bandpassfilters 31 mit dem verkippten Zusatz-Bandpassfilter 46 die Brechung des Lichts und der daraus resultierende Strahlenversatz wieder kompensiert. Weiter ist entlang der Ausbreitungsrichtung 39 der Raman-Strahlung 25 eine Kollektorplatte 48 angeordnet, über die die transmittierte Raman-Strahlung 25 gerichtet auf einen Detektor 35 lenkbar ist. Das optische Verhalten der Raman-Strahlung 25 in Wechselwirkung mit dem Bandpassfilter 30, dem Zusatz-Bandpassfilter 46 und/oder der Kollektorplatte 48 ist in einem Simulationsprogrammprodukt 60 nachstellbar. Insgesamt erlaubt die in FIG 5 gezeigte Ausführungsform die Verwendung kosteneffizienter Bandpassfilter mit erhöhten Toleranzen, da die angestrebten Zentralwellenlängen 52, die auf den Detektor 35 einfallen, durch das Verkippen noch einstellbar sind.

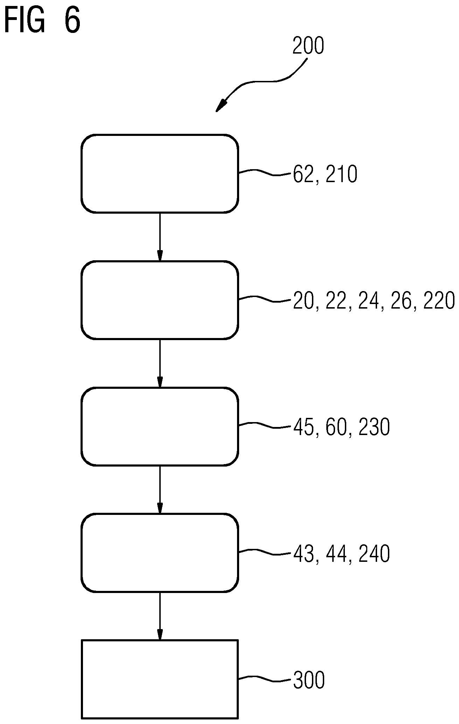

Eine Ausführungsform des beanspruchten Simulationsverfahrens 200 ist in FIG 6 in einem Ablaufdiagramm dargestellt. Das Simulationsverfahren 200 ist dazu ausgebildet, ein Betriebsverhalten eines Raman-Photometers 10, wie beispielsweise in FIG 1, FIG 3 oder FIG 4 dargestellt, nachzustellen. In einem ersten Schritt 210 wird ein Datensatz 62 bereitgestellt, durch den das Raman-Photometer 10 zumindest teilweise in seiner Funktionsweise nachstellbar ist. In einem anschließenden zweiten Schritt 220 wird zumindest ein Betriebsparameter vorgegeben, durch den das zu simulierende Betriebsverhalten charakterisiert ist. Der zumindest eine Betriebsparameter umfasst eine Zusammensetzung einer Stoffprobe 20, also einer virtuellen Repräsentanz zumindest einer Komponente 22 der Stoffprobe 20. Die Komponente 22 der Stoffprobe 20 weist ein erstes und ein zweites Kernspin-Isomer 24, 26 auf. Weiter gehört ein dritter Schritt 230 zum Simulationsverfahren 200, in dem ein Simulationsprogrammprodukt 60 ausgeführt wird. Mittels des Simulationsprogrammprodukts 60 wird basierend auf dem Datensatz 62 aus dem ersten Schritt 210 und dem Betriebsparameter aus dem zweiten Schritt 220 ein Leistungsparameter ermittelt. Der Leistungsparameter ist hierbei ein Kernspin-Isomer-Verhältnis 45, das durch das Raman-Photometer 10, also dessen Digitalen Zwilling, gemessen wird. Ferner gehört ein vierter Schritt 240 zum Simulationsverfahren 200, in dem der ermittelte Leistungsparameter über eine Anzeigevorrichtung 43 einem Benutzer angezeigt werden. Alternativ oder ergänzend wird im vierten Schritt 240 der ermittelte Leistungsparameter über eine Datenschnittstelle 44 ausgegeben. Anschließend erreicht das Simulationsverfahren 200 einen Endzustand 300.

## Patentansprüche

1. Raman-Photometer (10) zum Erfassen einer Zusammensetzung einer Stoffprobe (20) mit zumindest einer Komponente (22) mit einer Mehrzahl an Kernspin-Isomeren (24, 26), umfassend eine Messzelle (12), die dazu ausgebildet ist, darin die Stoffprobe (20) zum Emittieren einer Raman-Strahlung (25) anzuregen, wobei das Raman-Photometer (10) zumindest einen Bandpassfilter (30, 31, 32) aufweist, der für ein Teilspektrum (27, 29) der Raman-Strahlung (25) der Komponente (22) der Stoffprobe (20) transparent ist, **dadurch gekennzeichnet, dass** ein erster Bandpassfilter (31) für das Teilspektrum (27) eines ersten Kernspin-Isomers (24) transparent ist.

2. Raman-Photometer (10) nach Anspruch 1, **dadurch gekennzeichnet, dass** das Raman-Photometer (10) einen zweiten Bandpassfilter (32) aufweist, der für das Teilspektrum (29) eines zweiten Kernspin-Isomers (26) transparent ist.

3. Raman-Photometer (10) nach Anspruch 1 oder 2, **dadurch gekennzeichnet, dass** die Komponente (22) molekularer Wasserstoff (28) ist, das erste Kernspin-Isomer (24) Ortho-Wasserstoff und/oder das zweite Kernspin-Isomer (26) Para-Wasserstoff ist.

4. Raman-Photometer (10) nach Anspruch 2 oder 3, **dadurch gekennzeichnet, dass** der erste und zweite Bandpassfilter (31, 32) abwechselnd einem einzigen Detektor (35, 36, 38) vorschaltbar angeordnet sind.

5. Raman-Photometer (10) nach Anspruch 2 oder 3, **dadurch gekennzeichnet, dass** dem ersten Bandpassfilter (31) ein erster Detektor (36) und dem zweiten Bandpassfilter (32) ein zweiter Detektor (38) zugeordnet ist.

6. Raman-Photometer (10) nach einem der Ansprüche 1 bis 5, **dadurch gekennzeichnet, dass** der erste Bandpassfilter (31) für eine Rotationslinie des ersten Kernspin-Isomers (24) transparent ist und/oder der zweite Bandpassfilter (32) für eine Rotationslinie des zweiten Kernspin-Isomers (26) transparent ist.

7. Raman-Photometer (10) nach einem der Ansprüche 1 bis 6, **dadurch gekennzeichnet, dass** zumindest einer der Bandpassfilter (30, 31, 32) vorgebbar kippbar ausgebildet ist.

8. Raman-Photometer (10) nach einem der Ansprüche 1 bis 7, **dadurch gekennzeichnet, dass** die Messzelle (12) mit zumindest einer durchstimmbaren Lichtquelle (16) zum Anregen der Stoffprobe (20) ausgestattet ist.

9. Raman-Photometer (10) nach einem der Ansprüche 1 bis 8, **dadurch gekennzeichnet, dass** die Messzelle (12) mit einer ersten und einer zweiten Lichtquelle (16) ausgestattet ist, durch die die Stoffprobe (20) abwechselnd oder gleichzeitig zum Emittieren von Raman-Strahlung (25) anregbar ist.

10. Verfahren (100) zum Erfassen eines Kernspin-Isomer-Verhältnisses (45) einer Komponente (22) in einer Stoffprobe (20), umfassend die Schritte:
a) Bereitstellen der Stoffprobe (20) und Anregen der Stoffprobe (20) zum Emittieren von Raman-Strahlung (25);
b) Filtern der Raman-Strahlung (25) und Transmittieren zumindest eines Teilspektrums (27, 29) der Raman-Strahlung (25);
c) Erfassen eines ersten und eines zweiten Peaks (81, 83) in der transmittierten Raman-Strahlung (25), wobei das erste Peak (81) durch das erste Kernspin-Isomer (24) verursacht und das zweite Peak (83) durch das zweite Kernspin-Isomer (26) verursacht ist;
d) Ermitteln des Kernspin-Isomer-Verhältnisses (45) basierend auf dem in Schritt c) erfassten ersten und zweiten Peak (81, 83) und Ausgeben des ermittelten Kernspin-Isomer-Verhältnisses (45) an einen Benutzer und/oder eine Datenschnittstelle (44).

11. Verfahren (100) nach Anspruch 10, **dadurch gekennzeichnet, dass** die Komponente (22) der Stoffprobe (20) molekularer Wasserstoff (28), das erste Kernspin-Isomer (24) Ortho-Wasserstoff und das zweite Kernspin-Isomer (26) Para-Wasserstoff ist.

12. Verfahren (100) nach Anspruch 10 oder 11, **dadurch gekennzeichnet, dass** das erste Peak (81) in einem ersten Teilspektrum (27) liegt und das zweite Peak (83) in einem zweiten Teilspektrum (29) liegt, das disjunkt zum ersten Teilspektrum (27) ist.

13. Verfahren (100) nach einem der Ansprüche 10 bis 12, **dadurch gekennzeichnet, dass** das erste und zweite Peak (81, 83) in Schritt c) im Wesentlichen gleichzeitig erfasst werden.

14. Verfahren (100) nach einem der Ansprüche 10 bis 13, **dadurch gekennzeichnet, dass** das Verfahren (100) mit einem Raman-Photometer (10) nach einem der Ansprüche 1 bis 9 durchgeführt wird.

15. Computerprogrammprodukt (50), das zum Empfangen und Verarbeiten von Messignalen (41) von zumindest einem Detektor (35, 36, 38) eines Raman-Photometers (10) ausgebildet ist, **dadurch gekennzeichnet, dass** das Computerprogrammprodukt (50) dazu ausgebildet ist, ein Verfahren (100) nach einem der Ansprüche 10 bis 13 durchzuführen.

16. Verwendung einer Messvorrichtung zum Erfassen eines Kernspin-Isomer-Verhältnisses (45) in molekularem Wasserstoff (28), der in einer Verflüssigungsanlage (70) verflüssigt wird, **dadurch gekennzeichnet, dass** die Messvorrichtung als Raman-Photometer (10) ausgebildet ist.

17. Simulationsverfahren (200) zum Nachstellen eines Betriebsverhaltens eines Raman-Photometers (10), umfassend die Schritte:
a) Bereitstellen eines Datensatzes (62), durch den eine Funktionsweise des Raman-Photometers (10) zumindest teilweise nachstellbar ist;
b) Vorgeben zumindest eines Betriebsparameters, durch den das zu simulierende Betriebsverhalten charakterisiert ist;
c) Ausführen eines Simulationsprogrammprodukt (60), mit dem zumindest ein Leistungsparameter des simulierten Raman-Photometers (10) basierend auf dem Datensatz (62) und dem zumindest einen Betriebsparameter ermittelt wird;
d) Ausgeben des in Schritt c) ermittelten zumindest einen Leistungsparameters an einen Benutzer und/oder eine Datenschnittstelle (44);
**dadurch gekennzeichnet, dass** das Raman-Photometer (10) nach einem der Ansprüche 1 bis 9 ausgebildet ist.

18. Simulationsprogrammprodukt (60) zum Nachstellen eines Betriebsverhaltens eines Raman-Photometers (10), **dadurch gekennzeichnet, dass** das Simulationsprogrammprodukt (60) dazu ausgebildet ist, ein Simulationsverfahren (200) nach Anspruch 17 durchzuführen.
